# EUROPÄISCHE PATENTANMELDUNG

(11) **EP 1 286 069 A1**
(43) Veröffentlichungstag der Anmeldung: **26.02.2003**
(21) Anmeldenummer: 02015048.8
(22) Anmeldetag: 05.07.2002
(51) Int. Cl.: F16D 3/205, F16C 29/04

(54) **Tripodegelenk**

(30) Priorität: 23.08.2001 DE 10141427
(71) Anmelder: DaimlerChrysler AG, 70567 Stuttgart (DE)
(72) Erfinder: Henkel, Jürgen, 71394 Kernen (DE); Münich, Peter, 70736 Fellbach (DE); Schröder, Rolf, 70619 Stuttgart (DE); Wörner, Günter, 71394 Kernen (DE)

(57) **Zusammenfassung**

Bekannte Tripodegelenke verfügen über ein Gelenkaußenteil (12) sowie ein Gelenkinnenteil (11), welche unter Zwischenschaltung von zylinderförmigen Wälzkörpern (23) und Gewährleistung einer axialen Verschiebung sowie einer Verschwenkbarkeit miteinander in Antriebsverbindung stehen. Zur Realisierung der Verschwenkbarkeit wird hierbei ein Kugelzapfen in einer Kugelkalotte geführt.

Erfindungsgemäß wird anstelle der Kugelkalotte der Kugelköper (17) in einer teilzylindrischen Bohrung (18) geführt, in welchen zur axialen Sicherung und zur Führung der Schwenkbewegung ein Führungsring (43) eingesetzt ist.

Das erfindungsgemäße Tripodegelenk (10) eignet sich zur verschieblichen und verschwenkbaren Antriebsverbindung zweier Wellenenden (13,14), insbesondere im Zusammenhang mit Antriebssträngen oder Seitenwellen von Kraftfahrzeugen.

## Beschreibung

Die Erfindung betrifft ein Tripodegelenk gemäß dem Oberbegriff des Patentanspruchs 1.

Tripodegelenke finden beispielsweise Einsatz als Seitenwellen von Kraftfahrzeugen. Hierbei dienen die Tripodegelenke zur Übertragung von Antriebsmomenten zwischen zwei Antriebselementen eines Antriebsstranges. Mittels der Tripodegelenke ist der Ausgleich einer relativen Verschiebung sowie einer relativen Verschwenkung der Antriebselemente ermöglicht. Für den Einsatz bei Seitenwellen eines Kraftfahrzeuges sind derartige Relativbewegungen durch Einfederungen der Fahrzeugräder bedingt.

Aus der US 4 619 628 ist ein Tripodegelenk mit einem Gelenkaußenteil und einem in diesem aufgenommenen Gelenkinnenteil bekannt. Das Gelenkinnenteil verfügt über einen Tripodestern mit Kugelkörper aufweisenden Zapfen. Die Kugelkörper finden verschwenkbar in einer teilkugelförmigen Kugelkalotte eines Druckstückes Aufnahme und sind somit verschwenkbar gegenüber dem Druckstück gelagert. Das Druckstück ist über Wälzlager beweglich gegenüber Gegenflächen des Gelenkaußenteiles gelagert.

Die Herstellung der Ausnehmung aus dem Druckstück zur Bildung der Kugelkalotte erfordert einen hohen Fertigungsaufwand. Zur Realisierung flächiger Anlageflächen des Druckstückes an dem Kugelkörper ist die Fertigung einer gekrümmten Fläche mit hoher Präzision erforderlich. Ein weiteres Problem stellt die Montage des Kugelkörpers in dem Druckstück dar. Üblicherweise ist hierzu eine Ausgestaltung der Verbindung als Bajonett-Verbindung erforderlich.

Der Erfindung liegt die Aufgabe zugrunde, eine andere Ausgestaltung einer eine Verschwenkung gewährleistenden Verbindung zwischen Druckstück und Kugelkörper eines Tripodegelenkes vorzuschlagen.

Ein Vorschlag zur Lösung der der Erfindung zugrundeliegenden Aufgabe ist gekennzeichnet durch die Merkmale des Patentanspruchs 1. Die Ausnehmung aus dem Druckkörper ist mit einem zylindrischen Teilbereich ausgebildet. Dieser kann gegenüber einer Kugelfläche vereinfacht mit hoher Präzision gefertigt werden. Mindestens ein Führungsring ist im Bereich des zylindrischen Teilbereiches in den Druckkörper eingesetzt. Hierdurch können die Montagemöglichkeiten erweitert werden. Des weiteren kann der Führungsring aus einem anderen Material gefertigt sein als der Druckkörper. Beispielsweise kann im Bereich des mindestens einen Führungsringes ein (teureres) Material eingesetzt werden mit verbesserten Gleiteigenschaften. Der Kugelkörper stützt sich über den Führungsring gegenüber dem Druckkörper ab. Bei einer Entfernung des Führungsringes kann beispielsweise eine Demontage des Druckstückes von dem Kugelkörper erfolgen. Aufwendige Bajonett-Verbindungen erübrigen sich somit. Die Montage des Druckkörpers mit dem Kugelkörper setzt keine rotierende Bewegung wie bei einer Bajonett-Verbindung voraus. Weiterhin können durch die Führungsringe - im Gegensatz zu großflächigen Anlageflächen - definierte Kontaktbereiche für die Kraftübertragung zwischen Kugelkörper und Druckkörper vorgegeben werden.

Eine besonders vorteilhafte Ausgestaltung der Erfindung ergibt sich, wenn die Ausnehmung als zylindrische Bohrung ausgebildet ist, in welche zwei beabstandete Führungsringe eingesetzt sind. Zur Fertigung sind somit lediglich die Bohrung und die Nuten in das Druckstück einzubringen. Die Führungsringe können in großen Stückzahlen hergestellt werden.

Vorteilhafte Ausgestaltungen ergeben sich aus den Unteransprüchen und der Beschreibung.

Bevorzugte Ausführungsbeispiele des erfindungsgemäßen Tripodegelenkes werden nachfolgend anhand der Zeichnung näher erläutert. In der Zeichnung zeigen:

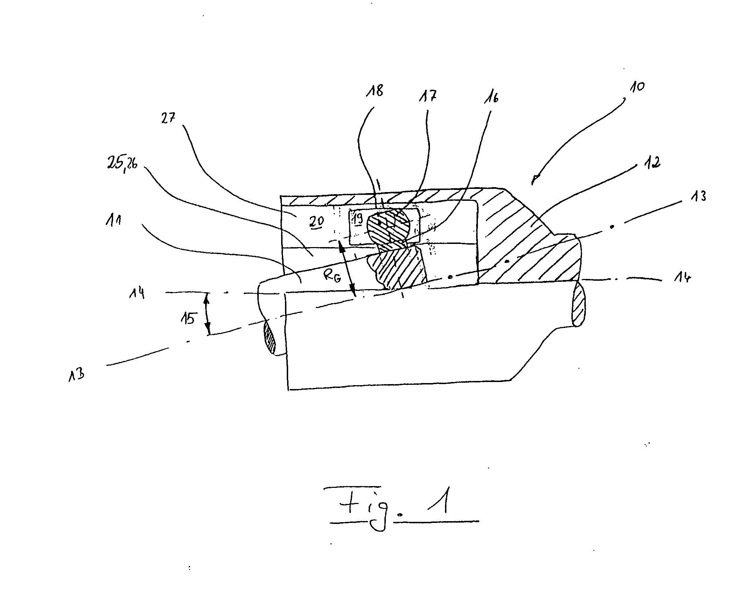

- Fig. 1: ein Tripodegelenk im Längsschnitt,
- Fig. 2: ein Tripodegelenk im Querschnitt,
- Fig. 3: einen Gelenkzapfen mit Druckkörper, Käfig, Wälzkörpern und Zentrierelementen im Schnitt A-A gemäß Fig. 2,
- Fig. 4: einen erfindungsgemäßen Gelenkzapfen mit Druckstück, Führungsring, Laufkäfig und Wälzkörpern in einem Schnitt quer zur Längsachse 13-13,
- Fig. 5: einen weiteren erfindungsgemäßen Gelenkzapfen mit Druckstück, Führungsring, Laufkäfig und Wälzkörpern in einem Schnitt quer zur Längsachse 13-13 und
- Fig. 6: einen weiteren erfindungsgemäßen Gelenkzapfen mit Druckstück, Führungsring, Laufkäfig und Wälzkörpern in einem Schnitt quer zur Längsachse 13-13.

Ein Tripodegelenk 10 verfügt über ein Gelenkinnenteil 11 sowie ein dieses aufnehmendes Gelenkaußenteil 12. Das Gelenkinnenteil 11 sowie das Gelenkaußenteil 12 sind jeweils zumindest drehfest mit einem Antriebselement eines Antriebsstrang eines Kraftfahrzeuges verbunden, beispielsweise mit einer Antriebswelle und einem Fahrzeugrad. Das Tripodegelenk 10 dient einer Übertragung eines Antriebsmomentes zwischen dem Gelenkinnenteil 11 und dem Gelenkaußenteil 12 bei Gewährleistung einer relativen Verschiebung entlang der Längsachse 13-13 des Gelenkinnenteils 11 bzw. der Längsachse 14-14 des Gelenkaußenteils 12, einer relativen Verschwenkung des Gelenkinnenteils 11 gegenüber dem Gelenkaußenteil 12, welche mit einer Veränderung des Winkels 15 zwischen den Längsachsen 13-13 und 14-14 einhergeht, sowie einer räumlichen Bewegung, welche sich aus einer Überlagerung der vorgenannten Bewegungsformen ergibt.

Das Gelenkinnenteil 11 verfügt am innenliegenden Ende über drei ein- oder mehrstückig mit diesem ausgebildete, radial orientierte und jeweils unter 120° in Umfangsrichtung verteilte Zapfen 16, welche einen Tripodestern bilden. Die Zapfen 16 weisen jeweils einen teilkugelförmigen Kugelkörper 17 auf. Der Kugelkörper 17 liegt zur Übertragung von Kräften in beide Umfangsrichtungen jeweils im Bereich der kugelförmigen Mantelfläche an einer korrespondierend ausgebildeten Ausnehmung 18 eines Druckstückes 19 an. Auf der gegenüberliegenden, einer ebenen Gegenfläche 20 des Gelenkaußenteiles 12 zugewandten Seite des Druckstückes 19 ist dieses mit einer Lauffläche 21 eben ausgebildet.

Die Lauffläche 21 und die Gegenfläche 20 sind parallel zueinander orientiert. Zwischen diesen sind zylinderförmige Wälzkörper 23, insbesondere Rollen oder Nadeln, unter Ausbildung eines Linienkontaktes aufgenommen. Mehrere Wälzkörper sind in einem Käfig 24 derart geführt, daß sich die relative Lage der Längsachsen der Wälzkörper gegenüber den Käfigen nicht wesentlich ändert. Zur Übertragung von Umfangskräften in die entgegengesetzte Richtung ist jeder Zapfen 16 mit zwei zugeordneten Druckstücken 19, den Wälzkörpern 23 und den Flächen 20, 21 symmetrisch zu einer die Längsachse 13-13 aufnehmenden Zapfenmittenebene ausgebildet.

Die Lauffläche 21 eines Druckstückes 19 hat vorzugsweise eine rechteckige Form, so daß möglichst viele Wälzkörper 23 bei Verringerung der Flächenpressung einen tragenden Kontakt ausbilden. Es sind jedoch auch kreisförmige oder ovale Druckstücke 19 möglich.

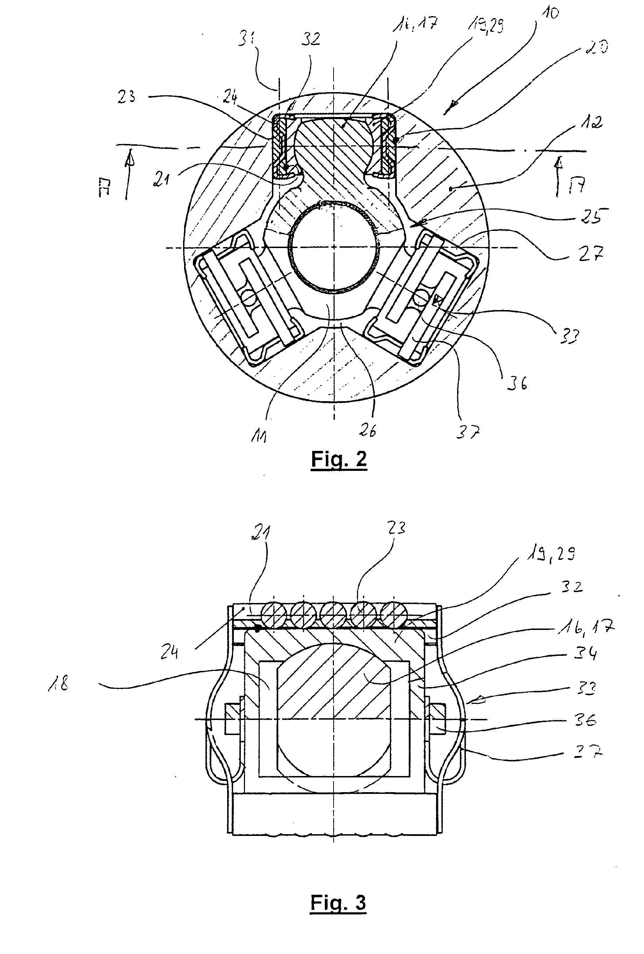

Das Gelenkaußenteil 12 verfügt über eine in Richtung der Längsachse 14-14 orientierte Ausnehmung 25 mit im wesentlichen kreisförmiger, mittiger Bohrung 26 sowie drei radial orientierten und jeweils unter 120° in Umfangsrichtung verteilten Aufnahmeräumen 27, die jeweils zur Aufnahme und Abstützung eines Zapfens 16, zweier Druckstücke 19 und von Wälzkörpern 23 dienen. Die Aufnahmeräume 27 verfügen in dem in Fig. 2 dargestellten Schnitt über eine im wesentlichen U-förmige, in Richtung der Bohrung 26 offene Kontur, wobei die Seitenschenkel der U-förmigen Kontur mit den Gegenflächen 20 gebildet sind. Im Ausführungsbeispiel gemäß Fig. 2 sind die Seitenschenkel geradlinig ausgebildet ohne Übergangsbereich zu den Gegenflächen 20. In Richtung der Bohrung 26 verfügen die Seitenschenkel insbesondere über keine Vorsprünge oder Vertiefungen, sondern gehen im innenliegenden Endbereich mit einer Abstandvergrößerung in die Bohrung 26 über. Die Wälzkörper mit Käfig sind in der in Fig. 2 dargestellten Stellung des Tripodegelenkes radial beabstandet von dem Grundschenkel der U-förmigen Kontur angeordnet.

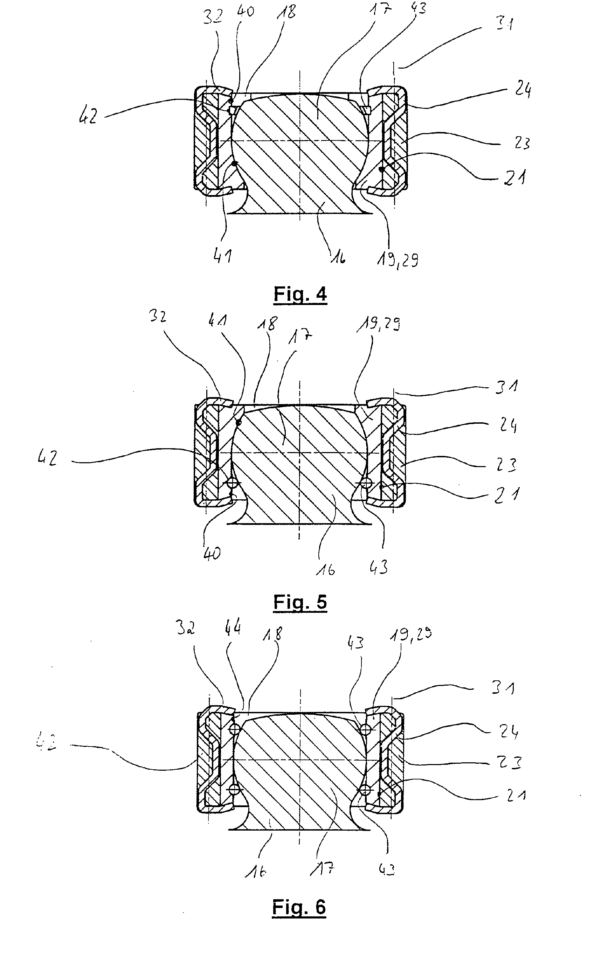

Gemäß Fig. 2 sind die Wälzkörper 23 in einem Käfig 24 geführt. In den Käfigen 24 sind die Wälzkörper 23 unter Gewährleistung der relativen Lage der Längsachsen 31 der Wälzkörper 23 zueinander geführt. Die Käfige 24 sind gegenüber dem Druckstück 19 in radialer Richtung über das Druckstück 19 umgreifende bzw. einschließende Schultern 32 geführt (Fig. 4 bis 6). Die Käfige 24 können über die Schultern 32 wie dargestellt auf das Druckstück 19 "geclipst" werden. Die Käfige 24 können weiterhin über Zentrier- oder Federelemente 33 in Laufrichtung der Wälzkörper 23 zentriert sein. Zwei Käfige 24 eines Zapfens 16 können über ein gemeinsames Federelement 33 geführt bzw. zentriert sein.

Die einem Kugelkörper 17 zugeordneten Druckstücke 19 sind für beide Umfangsrichtungen über zwei Verbindungsstege 34 zu einem einstückig ausgebildeten Druckkörper 29 verbunden. Eine Einführung des Kugelkörpers 17 in den einstückigen Druckkörper 29 kann gemäß der in Fig. 3 dargestellten Ausgestaltung durch eine an sich bekannte Ausführung als Bajonett-Verbindung gewährleistet sein.

Gemäß dem Ausführungsbeispiel nach Fig. 2, Fig. 3 sind zwei Federelemente 33 über jeweils ein Befestigungsmittel 36 mit dem Druckkörper 29 oder dem Kugelkörper 17 verbunden. Die Federelemente 33 verfügen jeweils über zwei elastische Finger 37, welche zur Abstützung der gegenüberliegender Käfige 24 an diesen anliegen oder mit diesen verbunden sind.

Der Käfig 24 mit den Wälzkörpern hat gegenüber dem Kugelkörper 17 insbesondere ausschließlich zwei Freiheitsgrade: Infolge einer geeignet ausgewählten Verbindung des Kugelkörpers 17 mit dem Druckkörper 29 ist eine Verschwenkbarkeit um eine Achse senkrecht zur durch die Längsachse 13-13 des Gelenkinnenteiles 11 und die Längsachse der Zapfen 16 aufgespannten Ebene gewährleistet. Der zweite Freiheitsgrad besteht in der translatorisch verschieblichen Verbindung zwischen Käfig 24 und Druckkörper 29. Zur Gewährleistung der Verschenkbarkeit des Druckkörpers 29 gegenüber dem Kugelkörper 17 kann das Druckstück 29 den Kugelkörper 17 gemäß Fig. 3 in einer Kugelkalotte aufnehmen.

Abweichend von der zuvor dargestellten Aufnahmeform in einer Kugelkalotte erfolgt erfindungsgemäß eine Aufnahme gemäß den Figuren 4 bis 6:

Gemäß dem in Figur 4 dargestellten Ausführungsbeispiel verfügt die Ausnehmung 18 aus dem Druckkörper 29 über einen ersten zylindrischen Teilbereich 40 und einen an diesen angrenzenden Teilbereich 41, welcher im wesentlichen einer Teilfläche einer Halbkugel entspricht. Im Bereich des Teilbereiches 41 liegt dieser flächig an dem Kugelkörper 17 an. Beabstandet von dem Übergangsbereich vom zylindrischen Teilbereich 40 zu Teilbereich 41 verfügt der zylindrische Teilbereich über eine Nut 42, in welche ein Führungsring 43 eingesetzt ist, insbesondere unter radialer Aufspreizung. Radial innenliegend liegt der Führungsring 43 an dem Kugelkörper 17 an.

Gemäß Fig. 4 ist der Teilbereich 41 zwischen dem zylindrischen Teilbereich 40 und dem Mittelpunkt des Tripodesternes angeordnet, während gemäß Fig. 5 der zylindrische Teilbereich 40 zwischen dem Teilbereich 41 und dem Mittelpunkt des Tripodesternes angeordnet ist.

Eine einfach herzustellende Ausgestaltung der Erfindung ist in Figur 6 dargestellt: Die Ausnehmung 18 ist (voll-)zylindrisch in Form einer Bohrung 44 ausgebildet und verfügt über zwei beabstandete Nuten 42 mit Führungsringen 43. Der Kugelkörper 17 liegt in diesem Fall in der Mitte der beiden Nuten 42 an der Bohrung 44 sowie an radial innenliegenden Kontaktflächen der Führungsringe 43 an. Bei Führungsringen 43 mit unterschiedlicher radialer Erstreckung kann der Kontaktbereich des Kugelkörpers 17 mit der Bohrung 44 aus der Mitte in Richtung des Führungsringes 43 mit kleinerer radialer Erstreckung verschoben sein. Es ist ebenfalls möglich, dass der Kugelkörper 17 lediglich an den beiden Führungsringen 43 anliegt oder in der Mitte an einem dritten Führungsring.

Die Führungsringe 43 sind vorzugsweise aus einem Material mit guten Gleiteigenschaften, beispielsweise Messing, gefertigt. Die Führungsringe 43 haben insbesondere einen rechteckförmigen, kreisförmigen oder ovalen Querschnitt oder verfügen in dem dem Kugelkörper 17 zugewandten Bereich über eine im Querschnitt konkave Krümmung, insbesondere mit dem Radius des Kugelkörpers 17. Mindestens ein Führungsring 43 kann fest mit dem Druckkörper 29 verbunden sein. Beispielsweise ist ein Führungsring 43 gemäß Figur 6 als innerer Absatz der Ausnehmung 18 des Druckkörpers 29 gefertigt oder mit diesem stoffschlüssig verbunden. Andere, insbesondere form-, kraft- oder stoffschlüssige Verbindungsformen der Führungsringe 43 mit dem Druckkörper 29 sind ebenfalls möglich. Beispielsweise kann mindestens ein Führungsring 43 über ein Außengewinde verfügen, mittels dessen der Führungsring 43 in den Druckkörper einschraubbar ist.

Anstelle des in den Figuren 4 bis 6 dargestellten einstückigen Druckkörpers 29 kann dieser mehrstückig ausgebildet sein, insbesondere mit zwei separaten Druckstücken 19.

Die erfindungsgemäße Ausgestaltung eignet sich für jedwede Ausgestaltungsform eines Tripodegelenkes, insbesondere solche auf Basis eines in einer Kugelkalotte geführten Kugelkörpers 17.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile sind den in den Zeichnungen dargestellten Geometrien der Vorrichtungsteile zu entnehmen.

## Patentansprüche

1. Tripodegelenk zur Übertragung eines Antriebsmomentes zwischen zwei Antriebselementen eines Antriebsstranges mit einem Gelenkinnenteil (11) und mit einem das Gelenkinnenteil aufnehmenden Gelenkaußenteil (12), wobei
a) das Gelenkinnenteil (11) über einen Tripodestern verfügt,
b) der Tripodestern über Kugelkörper (17) aufweisende Zapfen (16) verfügt,
c) die Kugelkörper (17) jeweils in einer Ausnehmung (1() aus einem Druckkörper (29) verschwenkbar gegenüber dem Druckkörper (29) gelagert sind,
d) über den Druckkörper (29) und Wälzkörper (23) eine Übertragung des Antriebsmomentes zum Gelenkaußenteil (12) erfolgt,
**dadurch gekennzeichnet, daß**
e) die Ausnehmung (18) aus dem Druckkörper (29) mit einem zylindrischen Teilbereich (40) ausgebildet ist
f) mindestens ein Führungsring (43) im Bereich des zylindrischen Teilbereiches (40) in den Druckkörper (29) eingesetzt ist und
g) sich der Kugelkörper (17) über den Führungsring (43) gegenüber dem Druckkörper (29) abstützt.

2. Tripodegelenk nach Anspruch 1,
**dadurch gekennzeichnet, daß**
die Ausnehmung (18) mit einem Teilbereich (41) entsprechend einem Ausschnitt aus einer Halbkugel sowie einem zylindrischen Teilbereich (40) gebildet ist und ein Führungsring (43) im zylindrischen Teilbereich (40) angeordnet ist.

3. Tripodegelenk nach Anspruch 1,
**dadurch gekennzeichnet, daß**
die Ausnehmung (18) als zylindrische Bohrung (44) ausgebildet ist, in welche zwei beabstandete Führungsringe (43) eingesetzt sind.

4. Tripodegelenk nach einem der vorhergehenden Ansprüche,
**dadurch gekennzeichnet, daß**
die Führungsringe (43) zumindest in dem dem Kugelkörper (17) zugewandten Bereich über einen gekrümmten und glatten, insbesondere teilkreisförmigen, Querschnitt verfügen.

5. Tripodegelenk nach einem der vorhergehenden Ansprüche,
**dadurch gekennzeichnet, daß**
die Führungsringe (43) in Nuten (42) des zylindrischen Teilbereiches (40) eingesetzt sind.
